(19) Europäisches Patentamt
European Patent Office
Office européen des brevets

(11) EP 2 287 515 A2

(12) **EUROPEAN PATENT APPLICATION**
published in accordance with Art. 153(4) EPC

(43) Date of publication:
**23.02.2011 Bulletin 2011/08**

(51) Int Cl.:
**F16L 58/00** (2006.01)

(21) Application number: **09746734.4**

(22) Date of filing: **08.05.2009**

(86) International application number:
**PCT/KR2009/002418**

(87) International publication number:
**WO 2009/139555 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.05.2008 KR 20080044659**

(71) Applicant: **Shim, Hak-Sub**
**Gangnam-gu, Seoul 135-807 (KR)**

(72) Inventors:
• **SHIM, Hak-Sub**
  **Gangnam-gu, Seoul 135-807 (KR)**
• **LEE, Deok-su**
  **Seoul 137-130 (KR)**

(74) Representative: **Ferreccio, Rinaldo**
**Botti & Ferrari S.r.l.**
**Via Cappellini, 11**
**20124 Milano (IT)**

(54) **APPARATUS FOR ELECTRIC TREATMENT OF FLUIDS**

(57)     An apparatus for electric treatment of fluid is provided. When heavy metal ions or a colloid carrying a positive charge is present in fluid traveling through metal pipework, a negative electrode is formed using a metal component having high ionization tendency, a positive electrode is formed using a metal component having ionization tendency lower than that of hydrogen, and an insulating layer is formed between the positive and negative electrodes. When conductive fluid passes through the positive electrode and the negative electrode, direct electrical power is applied to make the negative electrode emit electrons, which react with heavy metal ions present in the conductive fluid, thereby reducing the heavy metal ions. The metal component of the negative electrode emits electrons when ionized based on its ionization tendency and via an electrostatic action. Much more electrons are emitted compared to existing fluid treatment systems, and positive charges are removed more efficiently.

**Fig. 2**

EP 2 287 515 A2

**Description**

[Technical Field]

The present invention relates to an apparatus for electrostatic treatment of fluid capable of preventing scale from forming, and more particularly, to an apparatus for electrostatic treatment of fluid capable of applying an electrostatic field to a metal pipework, thereby more quickly and effectively preventing metal components of the metal pipework from corrosion and effectively preventing scale from forming on the inner wall of the metal pipework.

[Background Art]

To date, owing to brilliant development of scientific technology, the mankind has achieved industrialization and urbanization, and is leading affluent lives which had not been experienced before. Following the industrialization and urbanization, domestic sewage and industrial waste water are being produced at relatively massive amounts, and the people are becoming conscious of the seriousness of environmental pollution caused thereby.

Water is a resource essential for the survival of the mankind and is an important material resource that has enabled the industrialization and urbanization. While urban people are conscious of the importance of the supply of tap water as an essential element for the life environment, the supply of industrial water for the industrialization is strengthening its status as a material resource essential for the manufacturing and management of products in various plants. The supply of water is to ensure edible water or industrial water, which has stable and high quality. Although edible water or industrial water, which has best quality, is ensured, if a pipework system, which carries water to a place in which water is finally consumed, has a defect, the place in which water is finally consumed inevitably faces serious problems.

To date, it is regarded that the problem of ensuring high quality edible or industrial water is solved almost. In contrast, the problems of the pipework system, which carries water to the place in which water is finally consumed, are becoming more serious as time passes. This is because the pipework system basically employs metal pipes made of iron. Since the ionization tendency of the major component, i.e. iron (Fe), of the metal pipes is higher than that of water ($H_2O$), while water is flowing through the inside of the pipework, the iron component is dissolved into water, thereby causing the metal pipework to corrode. This phenomenon is accelerated as time passes, to the extent that red rust water is supplied to the place in which water is finally consumed.

At present, most corrosion occurring inside the metal pipe has the following theoretical background. Inside the metal pipe, water molecules, which are flowing through the inside of the metal pipe, cause friction on the inner surface of the metal pipe even if the friction is faint, and the friction causes a potential difference. In this process, the iron component of the metal pipe is deprived of electrons and is converted into iron ions, which in turn react with oxygen in water, thereby forming oxidized steel. Since oxidized steel is red, if the metal pipework is seriously corroded, red rust water is instantaneously poured out.

This can be expressed by the following chemical formulae:

$$Fe = Fe^{2+} + 2e^-$$

$$Fe^{2+} + O_2 + H_2O = Fe_2O_3$$

In the meantime, copper pipes are sometimes used in consideration of the problem of the corrosion of cast iron pipes that contain the metal component. The copper pipes are generally used in a small size pipework, since they are more expensive than the cast iron pipes. Although the copper pipes can solve the problem of corrosion caused by the iron component, they cannot fundamentally prevent the phenomenon of rust. In addition, the rust, if occurs, is harmful to the human body. Furthermore, the copper pipes can prevent by themselves the problem of corrosion caused by the iron component. They have the drawback in that they cannot provide a fundamental solution to the problem of rust occurring from the existing cast iron pipes, which were installed in advance.

In addition, the endurance of the copper pipes can be approved, since the copper pipes do not corrode. However, it is impossible to prevent scale, slime, or the like from forming on the inside of the copper pipes. Various minerals, which include a calcium component or the like, are dissolved in water. When calcium ions ($Ca^{2+}$) dissolved in water are bonded with carbon dioxide ($H_2CO_3$), which is also dissolved in water, insoluble calcium carbonate ($CaCO_3$) is formed. While flowing through the inside of the pipework, calcium carbonate sticks to the wall portion of the pipework, in which water flows most slowly. This gradually grows, thereby forming so-called scale. Once the scale is formed in the copper pipe, it gradually becomes larger. The scale acts as a factor that significantly lowers the velocity of water, since it clogs the passage inside the pipe. Therefore, it is impossible to fundamentally prevent the scale from forming even if the pipework is made of the copper pipes. This similar phenomenon occurs in the case of slime.

In consideration of the above matters, various types of products have been introduced. Among them, the product according to Korean Patent No. 313778, "FLUID TREATMENT DEVICE AND METHOD," is evaluated to be most efficient.

FIG. 4 shows "FLUID TREATMENT DEVICE AND METHOD" of Korean Patent No. 313778, which is used at present in order to prevent scale from forming on a pipework. It is evaluated that the "FLUID TREATMENT DEVICE AND METHOD" solves the problems of the metal pipework, such as rust and scale, relatively well. This is regarded to have the theoretical background as follows.

A fluid treatment device 50 of the related art has a housing body 12, an inlet 22, which is connected to a pipework, and through which fluid is introduced, an outlet 32, through which fluid is discharged, and a channel separator 24 inside the housing body between the inlet and the outlet. The channel separator 24 is made of plastic. The channel separator 24 is a number of small holes 26. Here, the channel separator 24 has one end face that is radially concaved toward the central portion in order to cause a change in the flow of fluid. In addition, the fluid treatment device 50 also includes a metal channel separator 40 adjacent to the channel separator 24. Although it is described that the metal channel separator 40 preferably uses zinc among from metals, detailed operations thereof are not described. The metal channel separator 40 also has a number of holes 42.

The fluid treatment device 50 as above is installed in the middle of a metal pipework (not shown), and is known to prevent the pipework from rust and scale from forming by performing the following reaction with water, which flows thereinto.

In the fluid treatment device 50 of the related art, water introduced from the pipework flows through the holes 42 of the metal channel separator 40. At this time, water dissolves the zinc component of the metal channel separator 40 through friction with the wall surface of the holes 42. Since zinc has very high ionization tendency, in particular, very high compared to iron, zinc dissolved in water can prevent the iron component of the metal pipe, such as a cast iron pipe, from being ionized, thereby fundamentally preventing the metal pipe from corrosion.

In the meantime, there is a great difference in ionization tendency between zinc and iron, and a potential difference occurs when they are deposited in the same solvent. It is presumed that such a potential difference inhibits microorganisms from occurring and prevents pollutions, such as scale, slime, or the like.

Although the fluid treatment device 50 of the related art has excellent performance as described above, there is a drawback in that, when the fluid treatment device 50 is actually used in the metal pipework, its visible effects cannot be approved unless a considerable time period is passed. This means that the effects of water treatment by the fluid treatment device 50 of the related art proceeds very slowly and gradually. It can be evaluated that the fluid treatment device 50 failed to perform the required and sufficient function for water, which exits into or enters from the metal pipework.

[Disclosure]

Therefore an object of the present invention is to provide an apparatus for electrostatic treatment of fluid, which can be installed in the middle of metal pipework of the related art in order to more quickly and efficiently prevent either corrosion or scale from forming in the metal pipework while allowing the metal pipework to be used as it is.

In addition, another object of the present invention is to provide a method of using the apparatus for electrostatic treatment of fluid, which can be installed in the middle of the metal pipework of the related art in order to more quickly and efficiently prevent either corrosion or scale from forming in the metal pipework while allowing the metal pipework to be used as it is.

The apparatus for electrostatic treatment of conductive fluid includes an inlet and an outlet each connected to a metal pipework, in which conductive fluid is introduced through the inlet and discharged to an outside through the outlet. The apparatus also includes an electrical treatment unit between the inlet and the outlet. The electrical treatment unit includes an electron, supply member made of metal, wherein the electron supply member has negative electricity and discharges electrons based on a potential difference; an electron-receiving member made of metal, wherein the electron-receiving member has positive electricity and receives the electrons generated by the potential difference; an insulating material placed between the electron supply member and the electron-receiving member such that the electron supply member and the electron-receiving member are coupled with but electrically insulated from each other; and a potential difference generator applying negative electricity to the electron supply member, applying positive electricity to the electron-receiving member, and supplying a potential difference from 1.1 to 60 volts between the electron supply member and the electron-receiving member.

In the invention, the electron supply member, the electron-receiving member, and the insulating member may be protected by a protection member, which protects the outside of the electron supply member, the electron-receiving member, and the insulating member.

In addition, in the invention, the conductive fluid may be water.

Furthermore, in the invention, the electrical treatment unit may be manufactured in a cylindrical shape the same as that of a metal pipe, and the inlet and the outlet may be coupled with the metal pipe.

If the conductive fluid is industrial water or tap water, the invention can be used by being directly connected to an industrial water pipe or a tap water pipe, and can efficiently remove heavy metal components dissolved in water.

In addition, the invention can remove a metal component having high ionization tendency by efficiently reducing it. In particular, the invention can advantageously lower the possibility of scale by removing a calcium component from water before it is bonded with carbon dioxide.

Furthermore, the invention can advantageously minimize the side effect of positive ions of the conductive fluid, since it is possible to remove the positive ions of the conductive fluid or lower the concentration thereof.

[Description of Drawing ]

FIG. 1 is a conceptual view explaining the principle of an electrostatic field of an electrical treatment unit 120 of the invention.
FIG. 2 is a conceptual view showing major parts of an apparatus for electrostatic treatment of fluid of the invention.
FIG. 3 is a cross-sectional view showing the technical configuration of the apparatus for electrostatic treatment of fluid of the invention.

[Best Mode]

The present invention is described in more detail with reference to the accompanying drawings. However, it should be understood that the accompanying drawings are provided herein in order to more clearly explain the principle of the invention and are not intended to limit the principle of the invention.

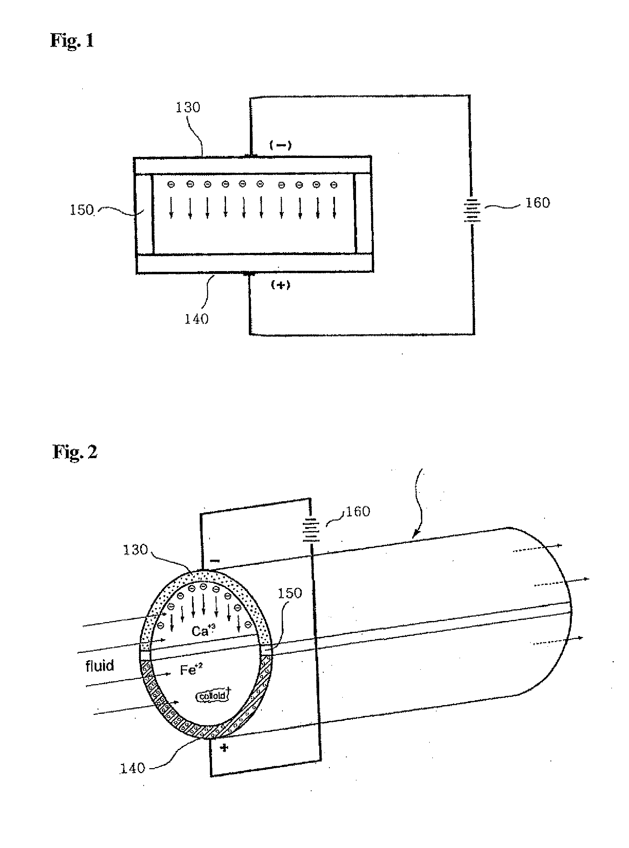

FIG. 1 is a conceptual view explaining the principle of an electrostatic field of an electrical treatment unit 120 of the invention.
FIG. 2 is a conceptual view showing major parts of an apparatus for electrostatic treatment of fluid of the invention.

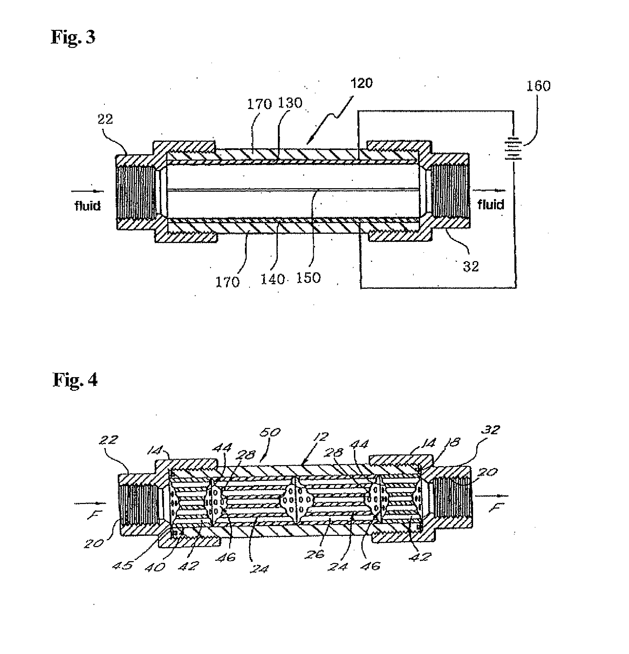

FIG. 3 is a cross-sectional view showing the technical configuration of the apparatus for electrostatic treatment of fluid of the invention.

The present invention provides an apparatus 100 for electrostatic treatment of fluid capable of efficiently processing conductive fluid.

The apparatus 100 for electrostatic treatment of fluid of the invention has an inlet 22, which is connected to a metal pipe, and through which conductive fluid from inside the metal pipe enters, and an outlet 32, through which conductive fluid exits. The inlet 22 and the outlet 32 can be coupled to the metal pipe, so that conductive fluid flows through the inside of the metal pipe.

The apparatus 100 for electrostatic treatment of fluid of the invention includes an electrical treatment unit 120. The electrical treatment unit 120 is placed between the inlet 22 and the outlet 32. Therefore, conductive fluid, which is introduced through the inlet 22, flows through the electrical treatment unit 120 before exiting through the outlet 32.

In the invention, the electrical treatment unit 120 includes an electron supply member 130, which discharges electrons $e^{-1}$ based on a potential difference. The electron supply member 130 is made of a metal material, and may be connected to a negative electrode when a static voltage having a difference in voltage V is applied from the outside. Since the electron supply member 130 is connected to the negative electrode, it is charged with negative electricity and thus discharges electrons $e^{-1}$. Electrons discharged from the electron supply member 130 move toward an opposite electron-receiving member 140 by electrostatic attraction, and electrical current is caused by a resultant potential difference.

If the electrons $e^{-1}$ disappear, it can be regarded that conductive fluid, which is flowing through the electrical treatment unit 120, or a material contained in the conductive fluid absorbed the electrons $e^{-1}$. In contrast, this indicates that the fluid or the material contained in the fluid will inevitably absorb the electrons $e^{-1}$, if the fluid or the material contained in the fluid flows between the electron supply material 130 and the electron-receiving member 140.

If any material having a plus (+) charge is contained in the conductive fluid, the material will absorb electrons $e^{-1}$ generated from the electron supply member 130 and the material itself will be electrically reduced to the zero (0) charge state.

In this embodiment, the electron supply member 130 is made of a metal material, and more preferably, is made of a metal (M) having ionization tendency higher than that of hydrogen. This is out of the above-described viewpoint of static electricity, and is intended to easily ionize the electron supply member 130 based on the potential difference with respect to the electron-receiving member 140. As a result, the electron supply member 130 itself is easily ionized, and dissolved into the fluid, thereby generating electrons $e^{-1}$, so that the electrons flow into the fluid. That is, it is intended to convert the metal M component having higher ionization tendency into metal ions $M^+$, so that the metal ions $M^+$ are dissolved into the conductive fluid, which is introduced through the inlet 110, and electrons $e^{-1}$ are supplied into the fluid.

In the invention, the metal (M) component is preferably a metal component that has ionization tendency higher than that of iron (Fe), Since a metal pipe, which contains an iron component, is typically used as a pipework, when the metal pipework is subjected to electric friction by the fluid, which flows through the inside thereof, the iron (Fe) component having relatively high ionization tendency is apt to be dissolved into the fluid. Therefore, the use of the metal component having ionization tendency higher than that of iron (Fe) prevents the iron component of the pipework from being ionized.

In the invention, if the conductive fluid flowing through the inside of the metal pipework is water, the iron (Fe) component is not easily dissolved from the metal pipework into the flow of water, since the metal pipework uses the metal (M) component having ionization tendency higher than that of the iron (Fe) component. Rather, iron ions ($Fe^{+2}$), which were pushed from the inside of the metal pipework, are reduced into iron metal by accepting electrons, which were freed from the metal having higher ionization tendency. When the metal component having ionization tendency higher than that of iron (Fe) is ionized in water, the metal (M) component having higher ionization tendency emits one to 3 electrons (negative ions) by being converted into monovalent ions $M^{+1}$, divalent ions $M^{+2}$, or trivalent ions $M^{+2}$. In contrast, positive ions of a heavy metal, which has lower ionization tendency, are reduced into the heavy metal by accepting the electrons (negative ions).

In the invention, the electron supply member 130 can be made of a metal component having high ionization tendency, which is selected from the group consisting of potassium (K), calcium (Ca), sodium (Na), magnesium (Mg), aluminum (Al), and zinc (Zn). A more preferable metal component can be selected from Al and Zn, since K, Ca, Na, and Mg are generally present bonded with other materials and are rarely present in a single component.

In the invention, the metal component is most preferably zinc (Zn). This is because, even if the metal (M) component having ionization tendency higher than that of iron (Fe) is preferable, a metal component is rarely present as pure ions in water if its ionization tendency is too high. In addition, the metal component is rarely present as a pure metal component at room temperature, since it is apt to be bonded with other nonmetallic elements. In addition, when the metal having high ionization tendency is ionized, it is inevitably dissolved in water. The water is absorbed into the human body when it is drunk. Thus, the metal is required not to be harmful when it is absorbed. In addition, it is preferable that the metal be easily discharged from the body, even if an excessive amount is taken. In this point of view, it is apparent that aluminum (A1) has undesirable characteristics.

In addition, zinc (Zn) is not harmful to the human body, is one of representative inorganic matters that constitute a cell inside the human body and regulate physiological functions when absorbed into the human body, and is a matter that is necessary for enzymes, which synthesize insulin, nucleic acid, and protein. The deficiency of zinc in the human body causes zinc deficiency, which is characterized by problems, such as poor appetite, retarded growth, skin eruption, sexual dysfunction, or the like.

Therefore, in the invention, zinc (Zn) having high ionization tendency is selected to be most appropriate for the metal component of the electron supply member 130 in consideration of the above-described matters.

In the invention, the technical features of the electron supply member 130 can be summarized as follows:

First, the electron supply member 130 emits electrons $e^{-1}$ via an electrostatic action, and then emits monovalent ions $M^{+1}$, divalent ions $M^{+2}$, or trivalent ions $M^{+2}$, together with electrons $e^{-1}$, based on ionization tendency.

Therefore, in the invention, one metal material, which constitutes the electron supply member 130, can emit a much more amount of electrons $e^{-1}$ or negative ions $e^{-1}$ compared to common cases. In addition, when the zinc metal was used as the electron supply member 130, it can supply zinc ions $Zn^{+2}$, which are beneficial to the human body. Therefore, it is possible to realize double or triple technical effects.

The invention includes the electron-receiving member 140 that accepts electrons, which are generated based on the potential difference. The electron-receiving member 140 is positioned opposite the electron supply member 130, and is insulated from the electron supply member 130 via an insulating member 150. At this point, the electron-receiving member 140 can remain in electrical contact with the electron supply member 130 via the conductive fluid. Therefore, the electron supply member 130 and electron-receiving member 140 can remain in electrical contact with each other when the conductive fluid is flowing between them. However, if the conductive fluid is not flowing, the electron supply member 130 and electron-receiving member 140 cannot remain in electrical contact with each other. (Here, it shall be assumed that the air is an insulator.)

In the invention, it is preferable that the electron-receiving member 140 be form a positive electrode (+) based on the potential difference. This is a part that can accept electrons $e^{-1}$, which are generated based on the potential difference, and it is also preferable that this part be made of a material including a metal component. Since the electron-receiving member 140 electrically forms the positive electrode (+), electrons $e^{-1}$, which are generated from the electron supply member 130, are drawn to the electron-receiving member 140 through, the conductive fluid by electrostatic attraction.

In addition, in the invention, the electron-receiving member 140 is made of a material including a metal component. It is preferable that the metal be selected from among metals, which have ionization tendency lower than that of hydrogen. This is because, if the conductive fluid flowing through the inside of the electron-receiving member 140 is water in the case in which the ionization tendency of the electron-receiving member 140 is higher than that of hydrogen, the metal component of the electron-receiving member 140 can be dissolved into water while emitting electrons into water, leading to a danger of substantially canceling the potential difference caused by the electron supply member 130. Therefore, the electron-receiving member 140 can be made of a metal component material that is selected from the group consisting of copper (Cu), mercury (Hg), silver (Ag), platinum (Pt), and gold (Au).

In the invention, copper (Cu) is most appropriate for the metal component material of the electron-receiving member 140. Among the metals having ionization tendency lower than that of hydrogen, mercury (Hg) is not desirable, since it is a heavy metal poisonous to the human body. In addition, silver (Ag), platinum (Pt), and gold (Au) are burdensome in terms of cost.

The invention includes the insulating member 150 present between the electron supply member 130 and the electron-receiving member 140.

In the invention, the insulating member 150 is present between the electron supply member 130 and the electron-receiving member 140 while maintaining the contact surfaces of the members 130 and 140, which are in contact therewith, to be electrically insulated. It is intended that the contact surfaces can remain insulated so that, if there is a difference in electrical potential between the contact surfaces, an electrical connection or a flow of electrons can be realized via an electrical conductor in another portion. In practice, the electron supply member 130 and the electron-receiving member 140 realize an electrical connection based on the potential difference, through the conductive fluid, which flows therebetween.

In the invention, the insulating member 154 can be made of insulating plastic, ceramic material, or other insulators. Among them, the plastic is most preferable in the invention because, most of all, the plastic has excellent workability and insulation, as well as excellent electrostatic characteristic due to friction. Although many products having various physical properties are present as the plastic, engineering plastic having good functionality and mechanical strength is preferable, and Polytetrafluoroethylene (PTFE), also known as Teflon, is most preferable.

The invention includes a potential difference generator 160 that connects the negative electrode to the electron supply member 130 and the positive electrode to the electron-receiving member 140.

In the invention, it is preferable that the potential difference generator 160 apply a voltage ranging approximately from 1.1 to 60 volts between the electron supply member 130 and the electron-receiving member 140. If a voltage lower than 1.1 volts is applied to the potential difference generator 160, it is difficult to generate electrons based on the potential difference. In contrast, if a voltage higher than 60 volts is applied, the human body can be subjected to an impact.

In the invention, the potential difference generator 160 is required to supply direct electrical power using a primary or secondary cell, and the use of alternating electrical power, which is supplied by being converted into direct electrical power by a rectifier, is not excluded.

The apparatus 100 for electrostatic treatment of fluid of the invention includes the outlet 32, through which fluid is discharged to the outside after the fluid is subjected to fluid treatment while traveling through the electrical treatment unit 120. It is preferable that the outlet 32 have threads such that it can be coupled with the metal pipework.

In the invention, the outside of the electron supply member 130, the electron-receiving member 140, and the insulating member 150 may be protected by a protection member 170. The protection member 170 may be insulated from the electron supply member 130 and the electron-receiving member 140, and may be insulated from the inlet 22 and the outlet 32.

In addition, in the invention, the conductive fluid may be water. If the conductive fluid is water, the invention can be advantageously used as a water treatment device for preventing a metal pipework from rust and scale.

In the invention, the electrical treatment unit 120 may be manufactured in a cylindrical shape the same as that of a metal pipe, and the inlet and the outlet may be coupled with the metal pipe.

The apparatus 100 for electrostatic treatment of fluid of the invention can be used in the following method.

If the apparatus 100 for electrostatic treatment of fluid of the invention is used in the state in which it is directly connected to the metal pipework 10, the conductive fluid flows through the electrical treatment unit 120. Then, the electron supply member 130 generates electrons $e^{-1}$, which in turn move in the direction toward the electron-receiving member 140. In the movement, the electrons $e^{-1}$ meet positive metal ions $M^{+2}$ or $M^{+3}$, which are dissolved into the conductive fluid, thereby reducing the metal ions.

In the invention, if the conductive fluid is water and the metal ions $M^{+2}$ or $M^{+3}$ are from a heavy metal, which is harmful to the human body, the heavy metal ions dissolved in water are reduced by the electrons $e^{-1}$. This process can be expressed by the following formulae.

$$\text{Divalent heavy metal ions } M^{+2} + 2e^{-1} = M \text{ - - - - - - (I)}$$

$$\text{Trivalent heavy metal ions } M^{+3} + 3e^{-1} = M \text{ - - - - - (II)}$$

Here, if the heavy metal ions are a metal component that has ionization tendency higher than that of zinc (Zn), it was impossible to reduce the heavy metal ion component using a method of simply ionizing zinc (Zn). In contrast, it is possible to reduce the heavy metal ions by generating electron ions using an electrostatic action.

In the meantime, the conductive fluid causes friction while traveling through the electrical treatment unit 120, so that the metal component of the electron supply member 130 is ionized by the friction. Here, if the metal component of the electron supply member 130 is a metal that has ionization tendency higher than that of iron (Fe), and more preferably, zinc (Zn), it is easily ionized in water. Accordingly, the metal component itself form zinc ions $Zn^{+2}$ while emitting electrons $e^{-1}$ into water. In this case, the availability of the electrons $e^{-1}$ and the zinc component is as described above.

Resultantly, when the conductive fluid passes through the electrical treatment unit 120 of the invention, any heavy metal ions dissolved in the conductive fluid are easily reduced and colloidal components present therein are easily neutralized by electrons, thereby facilitating cohesion. It can be appreciated that the electrical treatment unit 120 carries out the function of removing microorganisms and impurities dissolved in water and the function of reducing the heavy metal ions dissolved in water into heavy metal components through these actions.

In subsequence, the conductive fluid flows through the outlet 32 to the metal pipework and is directed to a place where it is finally consumed.

[industrial Applicability]

The apparatus for electrostatic treatment of fluid of the invention can be availably used to purify drinkable water, supply water, and graywater, which are necessary for the life of people, industrial water, which is used for example in plants, or the like.

In addition, the apparatus for electrostatic treatment of fluid of the invention can be availably used in a pipeline, which carries drinkable water, supply water, graywater, industrial water, and the like, in order to remove scale from the pipeline or prevent scale from forming in the pipeline.

It should be understood that, although the apparatus for electrostatic treatment of fluid of the present invention has been described in detail, this is only an illustration of the most preferable embodiments of the invention, but the invention is not limited thereto. Rasher, the scope of the invention shall be defined and limited by the accompanying claims. In addition, it is apparent that those skilled in the art can make various changes and imitations upon reviewing the above description of the specification of the invention and such changes and imitations do not depart from the scope of the invention.

**Claims**

1. An apparatus for electrostatic treatment of conductive fluid comprising:

an inlet 22 and an outlet 32 each connected to a metal pipework, wherein conductive fluid is introduced through the inlet and discharged to an outside through the outlet; and
an electrical treatment unit 120 between the inlet and the outlet,
wherein the electrical treatment unit 120 comprising:

an electron supply member 130 made of metal, wherein the electron supply member has negative electricity and discharges electrons based on a potential difference;
an electron-receiving member 140 made of metal, wherein the electron-receiving member has positive electricity and receives the electrons generated by the potential difference;
an insulating material 150 placed between the electron supply member 130 and the electron-receiving member 140 such that the electron supply member 130 and the electron-receiving member 140 are coupled with but electrically insulated from each other; and
a potential difference generator 160 applying negative electricity to the electron supply member 130, applying positive electricity to the electron-receiving member 140, and supplying a potential difference from 1.1 to 60 volts between the electron supply member 130 and the electron-receiving member 140.

2. The apparatus for electrostatic treatment of conductive fluid according to claim 1, wherein the electron supply member 130 is made of a metal (M) component having ionization tendency higher than that of hydrogen, and wherein the electron-receiving member 140 is made of a metal (M) component having ionization tendency lower than that of hydrogen.

3. The apparatus for electrostatic treatment of conductive fluid according to claim 2, wherein the electron supply member 130 is made of a metal (M) component having ionization tendency higher than that of iron (Fe), and the electron-receiving member 140 is made of copper (Cu).

4. The apparatus for electrostatic treatment of conductive fluid according to claim 3, wherein the electron supply member 130 is made of a zinc (Zn) component.

5. The apparatus for electrostatic treatment of conductive fluid according to claim 4, the electron supply member 130 comprises both electrons generated by the potential difference generator 160 and electrons generated by the ionization tendency, and reduces a heavy metal component contained in the conductive fluid by supplying the electrons to the conductive fluid.

6. The apparatus for electrostatic treatment of conductive fluid according to claim 1, wherein the insulating member 150 is made of plastic, ceramic, or an insulator.

7. The apparatus for electrostatic treatment of conductive fluid according to claim 6, wherein the insulating member 150 is made of Polytetrafluoroethylene (PTFE).

8. The apparatus for electrostatic treatment of conductive fluid according to claim 1, wherein the electron supply member 130, the electron-receiving member 140, and the insulating member 150 are protected by a protection member 170, which protects the outside of the electron supply member, the electron-receiving member, and the insulating member.

9. The apparatus for electrostatic treatment of conductive fluid according to any one of claims 1 to 8, wherein the conductive fluid is water.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 313778